Europäisches Patentamt

European Patent Office

Office européen des brevets

(19)

(11) Numéro de publication: **0 177 420**
**B1**

(12) FASCICULE DE BREVET EUROPEEN

(45) Date de publication du fascicule du brevet:
**27.01.88**

(51) Int. Cl.⁴: **B 60 Q 1/14,** B 32 B 17/10

(21) Numéro de dépôt: 85401908.0

(22) Date de dépôt: **01.10.85**

(54) **Vitrage feuilleté perfectionné à élément photo-sensible incorporé et dispositif automatique d'allumage et d'extinction des feux d'un véhicule automobile en comportant application.**

(30) Priorité: **04.10.84 FR 8415248**

(43) Date de publication de la demande:
**09.04.86 Bulletin 86/15**

(45) Mention de la délivrance du brevet:
**27.01.88 Bulletin 88/4**

(84) Etats contractants désignés:
**BE DE FR GB IT SE**

(56) Documents cités:
**FR - A - 2 160 389**

(73) Titulaire: **SAINT-GOBAIN VITRAGE, Les
Miroirs 18, avenue d'Alsace, F-92400 Courbevoie (FR)**

(72) Inventeur: **Leclercq, Jacques, 34, rue de Cambrai,
F-80240 Roisel (FR)**

(74) Mandataire: **Breton, Jean-Claude et al, SAINT-GOBAIN
RECHERCHE 39, quai Lucien Lefranc,
F-93300 Aubervilliers Cedex (FR)**

ACTORUM AG

# Description

La présente invention est relative aux vitrages feuilletés constitués par deux feuilles de verre réunies entre elles par une couche intercalaire de matière plastique, en général en polyvinyl butyral, utilisés notamment comme pare-brise de sécurité pour automobiles.

On a déjà proposé, par exemple dans le brevet français N° 2157901, d'incorporer dans des pare-brise, qu'ils soient en verre feuilleté ou en verre trempé, un élément photo-sensible à l'effet de commander automatiquement l'allumage et l'extinction des feux d'un véhicule automobile en fonction des variations de la luminosité.

Dans cette technique antérieure, l'élément photo-sensible était une photo-résistance relativement volumineuse et nécessitant un perçage du verre pour son incorporation.

Par ailleurs, la sensibilité de telles photo-résistances laisse à désirer.

L'invention se propose de remédier à ces inconvénients en réalisant un vitrage feuilleté perfectionné incorporant un élément photo-sensible et qui se prête mieux au montage dans un véhicule automobile en vue, notamment, de commander un dispositif automatique d'allumage et d'extinction des feux de ce véhicule.

Ce vitrage feuilleté faisant l'objet de l'invention est caractérisé en ce que l'élément photo-sensible est constitué par une photo-diode d'épaisseur telle qu'elle est noyée dans la couche de matière plastique intercalaire du vitrage feuilleté.

Il existe en effet des photo-diodes, notamment à cellule de silicium, dont l'épaisseur est si faible qu'elles peuvent se loger dans la couche intercalaire de matière plastique, telle que du polyvinyl butyral, qui a généralement une épaisseur de l'ordre de 0,7 mm.

Ceci permet, par rapport à la technique antérieure, de simplifier considérablement la réalisation du vitrage, puisque, au lieu d'avoir à ménager un orifice dans les verres, il suffit d'encocher la couche de polyvinyl butyral au cours de la fabrication du vitrage feuilleté pour y noyer l'élément photo-sensible.

Préalablement à l'enrobage dans la couche de matière plastique intercalaire, la photo-diode est pourvue d'un revêtement de matière plastique compatible avec celle de cette couche intercalaire pour accroître sa solidité et faciliter son enrobage dans cette couche. Cette photo-diode est avantageusement enrobée dans la couche intercalaire au voisinage d'un des bords du vitrage, ses conducteurs dépassant de celui-ci de manière à pouvoir être connectés à un circuit électrique externe.

Outre la facilité avec laquelle elle s'incorpore à un vitrage feuilleté, la photo-diode présente l'avantage d'avoir une caractéristique de réponse pratiquement linéaire à la luminosité ambiante. Il en résulte un meilleur fonctionnement des dispositifs asservis à cette photo-diode et spécialement un dispositif automatique d'allumage et d'extinction des feux d'un véhicule sur lequel est monté ce vitrage.

L'invention sera mieux comprise à l'aide de la description qui va suivre, donnée uniquement à titre d'exemple et faite en se référant aux dessins annexés, sur lesquels:

— la figure 1 est une vue, en perspective, d'une photo-diode utilisable selon l'invention et pourvue d'un revêtement de matière plastique préalablement à son enrobage dans la couche intercalaire d'un vitrage feuilleté,

— la figure 2 est un graphique illustrant la tension en millivolts en ordonnée susceptible d'être recueillie aux bornes de la photo-diode en fonction de la luminosité portée en lux en abscisse,

— la figure 3 est une vue, en coupe transversale, d'un vitrage feuilleté dans la couche intercalaire duquel est noyée une photo-diode selon la figure 1,

— la figure 4 est une vue, en perspective de face, d'un véhicule automobile dont le pare-brise est constitué par un vitrage selon la figure 3,

— la figure 5 est une vue, à plus grande échelle, en coupe suivant la ligne 5-5 de la figure 4 à laquelle a été incorporé un schéma du dispositif automatique de commande des feux du véhicule contrôlé par la photo-diode.

Ainsi qu'indiqué précédemment, l'invention repose sur l'incorporation dans un vitrage feuilleté d'une photo-diode comme élément photo-sensible susceptible de mesurer la luminosité ambiante et, à partir de cette mesure, de commander automatiquement une fonction du véhicule sur lequel est monté ce vitrage feuilleté, notamment un dispositif d'allumage et d'extinction des feux de ce véhicule.

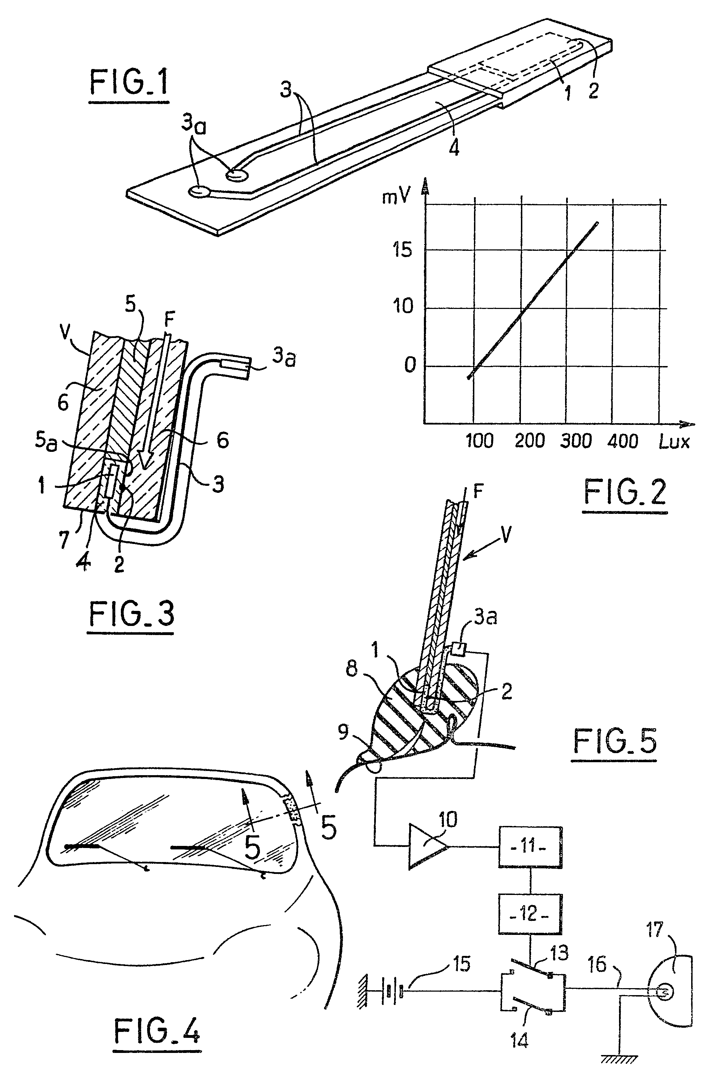

Une telle photo-diode est représentée sur la figure 1. Elle comporte une plaquette d'un matériau photo-sensible, désignée d'une manière générale par 1, et qui est avantageusement constituée de silicium.

Une des faces 2 de cette plaquette est la face sensible. Cette plaquette est par ailleurs raccordée à des conducteurs 3 se terminant par des bornes 3a.

La plaquette de silicium constituant l'élément sensible de la photo-diode et donc cette dernière peuvent avoir des dimensions très faibles. C'est ainsi que la longueur de la plaquette peut être d'environ 3,5 mm et son épaisseur de 0,27 mm, les conducteurs 3 ayant chacun un diamètre de 0,5 mm. En raison de ces faibles dimensions et de la fragilité qui en résulte, il est avantageux d'enrober cette photo-diode d'une matière plastique telle qu'une résine époxy, compatible avec la matière plastique dont est constituée la couche intercalaire d'un vitrage feuilleté. Cette matière plastique 4 doit être en particulier suffisamment transparente pour permettre la transmission de l'énergie lumineuse et posséder, de préférence, un indice de réfraction sensiblement égal à celui des éléments constituant le vitrage.

La plaquette de silicium, particulièrement fragile, est entourée d'une couche de matière plastique assez épaisse pour lui conférer une rigidité suffisante pour éviter toute déformation lors de sa mise en place dans le vitrage feuilleté.

Grâce à cet enrobage, la pastille de silicium atteint une épaisseur de l'ordre de 0,60 mm, cependant que les conducteurs 3 sont enrobés dans une épaisseur plus faible de matière plastique de l'ordre de 0,35 mm, ce qui leur assure la souplesse nécessaire pour l'application à laquelle ils sont destinés.

La photo-diode ainsi enrobée se prête remarquablement à son incorporation dans la couche intercalaire 5 de matière plastique, en général du polyvinyl butyral disposé entre les deux feuilles de verre 6 constituant avec elles un vitrage feuilleté, tel qu'un pare-brise.

En effet, cette couche intercalaire a généralement une épaisseur de 0,7 mm suffisante pour admettre l'épaisseur maximale de 0,60 mm de la photo-diode enrobée.

Un tel montage est illustré, schématiquement, sur la figure 3. On y voit que la photo-diode 1 est enrobée dans la couche intercalaire 5 selon l'un des bords du vitrage V avec sa face sensible 2 disposée parallèlement au vitrage et de manière que les conducteurs 3 et leurs bornes 3a, avec leur enrobage de matière plastique, puissent être repliés le long d'une arête 7 du vitrage V puis le long d'une des feuilles de verre 6 de manière à ce que les bornes 3a soient accessibles pour une connexion à tout dispositif électrique approprié.

Pour réaliser cette insertion de la photo-diode 1 dans un vitrage feuilleté, la feuille intercalaire 5 est découpée de manière à ménager une encoche 5a de la dimension de la photo-diode 1 enrobée qu'elle doit loger, avant son association avec les feuilles de verre 6.

La diode 1 étant logée dans cette encoche 5a, la feuille intercalaire 5 est encadrée des feuilles de verre 6 et l'ensemble est soumis à la chaleur et à la pression par passage en étuve et calandrage.

La matière plastique, telle que le polyvinyl butyral, constituant la couche intercalaire 5 se referme au cours de ce processus sur la tête de la photo-diode 1 en la fixant solidement à l'intérieur du vitrage feuilleté. On se rend ainsi compte de la simplicité de fabrication d'un vitrage incorporant un élément photo-sensible relativement aux réalisations antérieures comportant des photo-résistances pour lesquelles il était nécessaire, compte tenu de leurs dimensions et de leur rigidité, d'encocher les feuilles de verre avec toutes les complications que cela comporte.

Par ailleurs, la photo-diode utilisée selon l'invention et dont une variété commerciale est vendue par la firme RTC sous la désignation BPX 40 présente des caractéristiques de réponse à la lumière beaucoup plus avantageuses que les photo-résistances antérieures.

Ceci est illustré par la figure 2, sur laquelle est indiquée la tension que l'on peut recueillir aux bornes 3a en millivolts en fonction de la lumière à laquelle elle est soumise exprimée en lux.

La tension portée en ordonnée est celle mesurée à la sortie d'un convertisseur courant-tension branché aux bornes 3a et dans lequel un micro-ampère d'entrée correspond à une sortie de 25 millivolts.

Ainsi qu'on peut le voir sur cette figure, la réponse de la photo-diode 1 est pratiquement linéaire entre 100 et 400 lux, ce qui donne une plage de fonctionnement très efficace entre 100 et 300 lux.

Le vitrage V ainsi équipé d'une, voire de plusieurs photo-diodes 1, constitue un produit marchand qui peut être commercialisé auprès des fabricants d'automobiles en vue de réaliser des vitrages pour ces véhicules et, notamment, des pare-brise pour toutes les applications où un élément photo-sensible est nécessaire pour contrôler un automatisme sur ces véhicules.

Une application particulièrement intéressante de ce vitrage est illustrée aux figures 4 et 5. Elle consiste en un dispositif automatique d'allumage et d'extinction des feux de véhicule automobile en fonction de la luminosité ambiante.

Ce dispositif peut ainsi déclencher l'allumage des feux lorsque la luminosité ambiante baisse au-dessous d'un certain seuil, tel que 100 lux, par exemple à la tombée de la nuit ou lors du passage dans un tunnel. De même, ce dispositif peut éteindre automatiquement les feux du véhicule lorsque la luminosité croît au-delà d'un certain seuil, commodément 300 lux par exemple à l'aube ou à la sortie d'un tunnel. Pour éviter une extinction intempestive de ces feux, par exemple lors du franchissement d'une série de tunnels, il est bon de prévoir une temporisation entre le moment où la luminosité dépasse 300 lux et celui où les feux sont éteints par l'automatisme.

Dans cette application, la photo-diode doit être soustraite à tout éclairage accidentel susceptible de perturber le fonctionnement de l'automatisme, par exemple celui qui résulterait des phares des voitures venant en sens inverse.

A cet effet, ainsi qu'illustré aux figures 4 et 5, le vitrage V, un pare-brise en l'espèce, est monté de telle sorte que la photo-diode 1 soit encastrée dans le joint 8 du pare-brise et ce, dans la partie de ce joint fixée dans un montant latéral 9 du support du pare-brise et dans la moitié supérieure de ce montant. L'expérience a en effet montré que c'était là l'emplacement le plus approprié.

En effet, la photo-diode 1 est, à cet emplacement, soustraite à tout éclairage direct et ne reçoit que la lumière transmise par l'épaisseur du vitrage. Il est avantageux, pour éviter tout éclairage parasite de la photo-diode, que sa face sensible 2 soit tournée vers l'intérieur du véhicule, n'étant ainsi sensible qu'à la lumière arrivant selon la flèche F.

A partir de la réponse électrique de la photo-diode 1, recueillie aux bornes 3a de celle-ci, il est aisé de commander un dispositif automatique d'allumage et d'extinction des feux d'une automobile de type classique, tel que celui illustré schématiquement sur la figure 5.

Ce dispositif comprend un amplificateur 10 et un circuit de commande 11 agissant sur un relais 12 actionnant un interrupteur 13 monté en parallèle avec l'interrupteur manuel 14 sur le circuit 15, 16 des lampes 17 à commander.

Comme on l'a vu plus haut, le circuit de commande 11 comprend avantageusement un système temporisateur fonctionnant uniquement dans le sens de l'extinction des lampes 17 afin que celle-ci s'effectue un certain laps de temps après que l'on ait dépassé le seuil prédéterminé de luminosité ambiante, soit 300 lux.

L'expérience a montré qu'une temporisation de 30 secondes donne satisfaction dans la plupart des cas.

Bien entendu, l'invention n'est pas limitée aux modes de réalisation décrits et représentés qui n'ont été donnés qu'à titre d'exemple.

C'est ainsi que bien que le vitrage V ait été illustré comme étant un pare-brise d'automobile, ce peut être un autre vitrage quelconque de celle-ci, dans la mesure où il est réalisé en verre feuilleté.

Par ailleurs, le vitrage V selon l'invention peut comporter, enrobée dans sa couche de matière plastique intercalaire, plus d'une photo-diode 1, si cela s'avère souhaitable pour une application particulière envisagée.

## Revendications

1. Vitrage feuilleté (V) à élément photo-sensible (1) incorporé, caractérisé en ce que cet élément photo-sensible (1) est constitué par une photo-diode dont l'épaisseur est telle qu'elle est noyée dans la couche de matière plastique intercalaire (5) du vitrage feuilleté.

2. Vitrage feuilleté selon la revendication 1, caractérisé en ce que l'élément photo-sensible est une photo-diode (1) à cellule de silicium dont la face sensible (2) est orientée dans la couche intercalaire (5) parallèlement au vitrage (V).

3. Vitrage feuilleté selon la revendication 1 ou la revendication 2, caractérisé en ce que la photo-diode (1) est disposée au voisinage d'un des bords (7) du vitrage (V), des conducteurs (3) reliés à la cellule sensible dépassant de celui-ci de manière à pouvoir être connectés à un circuit électrique externe.

4. Vitrage feuilleté selon l'une quelconque des revendications précédentes, caractérisé en ce que la photo-diode (1) et ses conducteurs (3) sont pourvus d'un revêtement de matière plastique (4) compatible avec celle de la couche intercalaire (5) du vitrage pour faciliter leur enrobage dans cette couche intercalaire.

5. Vitrage feuilleté selon l'une quelconque des revendications 1 à 4, caractérisé en ce que plus d'une photo-diode (1) est noyée dans la couche intercalaire (5) du vitrage.

6. Dispositif automatique d'allumage et d'extinction des feux d'un véhicule automobile comportant application du vitrage feuilleté selon l'une quelconque des revendications 1 à 5, caractérisé en ce que les conducteurs (3) de la photo-diode (1) sont montés en parallèle dans le circuit d'éclairage (15, 16, 17) d'un véhicule automobile afin de commander, par l'intermédiaire d'un circuit d'amplification (10-13), les feux (17) de ce véhicule, ceux-ci étant allumés lorsque la luminosité ambiante décroît au-dessous d'un certain seuil et éteints lorsque cette même luminosité dépasse un second seuil.

7. Dispositif selon la revendication 6, caractérisé en ce que le vitrage (V) précité constitue le pare-brise du véhicule, l'agencement étant tel que la photo-diode soit disposée à l'intérieur du joint de montage (8) du pare-brise le long d'un des montants latéraux (9) de celui-ci, la face sensible (2) de la cellule de la photo-diode étant tournée vers l'intérieur du véhicule automobile, cet agencement étant destiné à protéger la photo-diode de tout éclairage direct de manière qu'elle soit essentiellement affectée par la luminosité ambiante transmise par le vitrage au travers de la feuille de verre interne (6) de celui-ci.

8. Dispositif selon la revendication 6 ou la revendication 7, caractérisé en ce que le seuil d'allumage des feux est de 100 lux environ et le seuil d'extinction des feux de 300 lux environ, une temporisation étant incorporée dans le circuit électrique de commande de manière que l'extinction ne se produise qu'un certain laps de temps après que le seuil de 300 lux ait été atteint.

## Patentansprüche

1. Verbundglas (V) mit eingebautem lichtempfindlichen Element (1), dadurch gekennzeichnet, dass dieses lichtempfindliche Element (1) eine Photodiode ist, deren Dicke derart ist, dass sie in die Zwischenschicht (5) aus Kunststoffmaterial des Verbundglases eingebettet ist.

2. Verbundglas nach Anspruch 1, dadurch gekennzeichnet, dass das lichtempfindliche Element eine Photodiodenzelle (1) aus Silizium ist, deren lichtempfindliche Fläche (2) in der Zwischenschicht (5) parallel zum Glas (V) orientiert ist.

3. Verbundglas nach Anspruch 1 oder 2, dadurch gekennzeichnet, dass die Photodiode (1) nahe einem der Ränder (7) des Glases (V) angeordnet ist, wobei die mit der Zelle verbundenen Leiter (3) von dieser so hervorstehen, dass sie mit einem äusseren Stromkreis verbunden werden können.

4. Verbundglas nach einem der vorhergehenden Ansprüche, dadurch gekennzeichnet, dass die Photodiode (1) und ihre Leiter (3) mit einem Überzug (4) aus Kunststoffmaterial versehen sind, das mit dem der Zwischenschicht (5) des Glases verträglich ist, um ihr Einhüllen in dieser Zwischenschicht zu erleichtern.

5. Verbundglas nach irgendeinem der Ansprüche 1 bis 4, dadurch gekennzeichnet, dass mehr als eine Photodiode (1) in die Zwischenschicht (5) des Glases eingebettet ist.

6. Vorrichtung zum automatischen Anschalten und Ausschalten der Scheinwerfer eines Automobils, umfassend die Anwendung des Verbundglases nach irgendeinem der Ansprüche 1 bis 5, dadurch gekennzeichnet, dass die Leiter (3) der Photodiode (1) in der Beleuchtungsschaltung (15, 16, 17) eines Automobils parallel geschaltet sind, um mittels einer Verstärkerschaltung (10 bis 13) die Scheinwerfer (17) dieses Automobils zu steuern,

7       0 177 420       8

wobei diese Schalter angeschaltet werden, wenn sich die Umgebungshelligkeit unter eine bestimmte Schwelle vermindert und sie ausgeschaltet werden, wenn diese Helligkeit eine zweite Schwelle übersteigt.

7. Vorrichtung nach Anspruch 6, dadurch gekennzeichnet, dass das vorgenannte Glas (V) die Windschutzscheibe des Automobils bildet, wobei der Aufbau derart ist, dass die Photodiode im Inneren der Montagefuge (8) der Windschutzscheibe längs einer von deren Seitenstützen (9) angeordnet ist und die lichtempfindliche Fläche (2) der Photodiodenzelle dem Inneren des Automobils zugewandt ist, wobei dieser Aufbau dazu bestimmt ist, die Photodiode vor jeglicher direkten Beleuchtung zu schützen, so dass sie im wesentlichen nur durch die Helligkeit beeinflusst wird, die durch die Innenscheibe (6) des Glases übertragen wird.

8. Vorrichtung nach Anspruch 6 oder 7, dadurch gekennzeichnet, dass die Helligkeit für das Anschalten der Scheinwerfer etwa 100 Lux und die Helligkeit für das Ausschalten der Scheinwerfer etwa 300 Lux beträgt, wobei eine Zeitverzögerung in die elektrische Schaltung derart eingebaut ist, dass die Ausschaltung erst nach einer gewissen Zeit, nachdem die Helligkeit von 300 Lux erreicht ist, erfolgt.

## Claims

1. A laminated pane (V) having an incorporated photosensitive element (1), characterised in that the photosensitive element (1) comprises a photodiode of which the thickness is such that it is immersed in the intermediate layer of plastics material (5) of the laminated pane.

2. A laminated pane according to claim 1, characterised in that the photosensitive element is a photo-diode (1) having a silicon cell of which the sensitive surface (2) is oriented in the intermediate layer (5) parallel to the pane (V).

3. A laminated pane according to claim 1 or claim 2, characterised in that the photo-diode (1) is arranged in the neighbourhood of one of the edges (7) of the pane (V), conductors (3) connected to the sensitive cell extending therefrom so as to be capable of being connected to an external electric circuit.

4. A laminated pane according to any one of the preceding claims, characterised in that the photo-diode (1) and its conductors (3) are provided with a coating of plastics material (4) compatible with that of the intermediate layer (5) of the pane to facilitate their embedding in this intermediate layer.

5. A laminated pane according to any of claims 1 to 4, characterised in that more than one photo-diode (1) is immersed in the intermediate layer (5) of the pane.

6. An automatic device for turning on and off the lights of an automobile vehicle comprising application of a laminated pane according to any one of claims 1 to 5, characterised in that the conductors (3) of the photo-diode (1) are mounted in parallel in the lighting circuit (15, 16, 17) of an automobile vehicle in order to control, by means of an amplifier circuit (10-13), the lights (17) of the vehicle, the latter being turned on when the ambient luminosity falls below a given level and being turned off when the luminosity rises above a second level.

7. A device according to claim 6, characterised in that said pane (V) forms the windscreen of the vehicle, the arrangement being such that the photo-diode is arranged inside the mounting joint (8) of the windscreen along one of its side uprights (9), the sensitive surface (2) of the photo-diode cell being directed towards the interior of the automobile vehicle, this arrangement being intended to protect the photo-diode from direct illumination so that it is affected essentially by ambient light transmitted by the pane through the interior glass sheet (6) thereof.

8. A device according to claim 6 or 7, characterised in that the level for turning the lights on is about 100 lux and the level for turning the lights off is about 300 lux, a time delay being incorporated in the electric control circuit so that the lights are turned off only after lapse of a give time after the level of 300 lux has been reached.